**Europäisches Patentamt**

**European Patent Office**

**Office européen des brevets**

(19)

(11) Veröffentlichungsnummer: **0 160 940**
**B1**

(12) **EUROPÄISCHE PATENTSCHRIFT**

(45) Veröffentlichungstag der Patentschrift:
**23.08.89**

(51) Int. Cl.⁴: **C 04 B 38/06**

(21) Anmeldenummer: **85105370.2**

(22) Anmeldetag: **02.05.85**

(54) **Feuerfeste Thermoisolationsmasse.**

(30) Priorität: **07.05.84 BG 65367/84**

(43) Veröffentlichungstag der Anmeldung:
**13.11.85 Patentblatt 85/46**

(45) Bekanntmachung des Hinweises auf die Patenterteilung:
**23.08.89 Patentblatt 89/34**

(84) Benannte Vertragsstaaten:
**BE CH DE FR GB IT LI LU NL SE**

(56) Entgegenhaltungen:
**DE-A-1 671 294**
**DE-A-2 909 653**
**DE-B-3 001 151**
**DE-C-173 037**
**DE-C-594 000**
**US-A-3 258 349**

(73) Patentinhaber: **SO "QUARZ", 4, Boul. Buckstone,
1618 Sofia (BG)**

(72) Erfinder: **Lyuzkanov, Stoyan Stefanov, Block 27,
Ap. 120 Komplex Mladost, BG- 1184 Sofia (BG)**
Erfinder: **Bojkov, Dimiter Kostadinov, 21, Trakia
Strasse, BG- 4000 Plovdiv (BG)**

(74) Vertreter: **von Füner, Alexander, Dr.,
Patentanwälte v. Füner, Ebbinghaus, Finck
Mariahilfplatz 2 & 3, D-8000 München 90 (DE)**

## Beschreibung

Die Erfindung betrifft eine feuerfeste Thermoisolationsmasse auf der Basis eines Gemisches aus anorganischen Stoffen und Porenbildnern für die thermische Isolierung von Wärmeaggregaten.

Es sind feuerfeste Thermoisolationsmassen bekannt, welche Gemische aus keramischen Naturrohstoffen, Oxiden und leichten Füllstoffen sind. Ihre Feuerfestigkeit hängt von der chemischen Zusammensetzung der Ausgangskomponenten in der Masse ab. Ihre niedrige Wärmeleitfähigkeit wird von den in ihnen vorhandenen Porenbildnern bestimmt. Bekannt ist es, die Porosität der feuerfesten Thermoisolationsmassen durch das Zufügen von Diatomit (Kieselgur), geblähtem Vermiculit oder Perlit, Granalien aus vorgebackenen und geblähten keramischen Massen oder verbrennenden organischen Zusätzen in ihre Zusammensetzung zu erzielen (Ogneupori i ich Primemenie, aus dem Japanischen, Moskau, 1984, S. 288 - 304, bzw. High Temperature Insulation, Interceram, No. 4, 1979, S. 410 - 420).

Nachteilig bei den bekannten Thermoisolationsmassen mit Vermiculit oder Diatomit ist ihre begrenzte Feuerfestigkeit. Die Betriebstemperatur, bis zu welcher sie benutzt werden können, übersteigt 1100° C nicht.

Nachteilig ist weiterhin die hohe Wärmeleitfähigkeit solcher hochfeuerfesten Thermoisolationsmassen.

Aus der DE-B-3 001 151 ist ein Verfahren zur Herstellung von vorwiegend leichten keramischen Erzeugnissen durch Verformen, Trocknen und Brennen einer keramischen Rohmasse aus Ton, Tonmaterialien, als Leichtzuschlagstoffe Kunststoffteilchen und/oder Kunststoffhohlkörper, Wasserglas sowie ein Wasserglashärter nach Patent 2 150 735, das dadurch gekennzeichnet ist, daß die Leichtzuschlagstoffe, das Wasserglas sowie der Wasserglashärter und die keramische Rohmasse getrennt in eine Form eingebracht werden, die Masse dann getrocknet und in üblicher Weise gebrannt wird, bekannt.

Aufgabe der Erfindung war es, feuerfeste Thermoisolationsmassen zu schaffen, welche gleichzeitig eine hohe Feuerfestigkeit haben, also hohe Betriebstemperaturen zulassen, und eine geringe Wärmeleitfähigkeit aufweisen.

Diese Aufgabe wurde durch eine Thermoisolationsmasse aus einem Gemisch von feuerfestem Ton und/oder Kaolin, flüssigem oder festem wasserlöslichem anorganischem Binder Wasser und als Porenbildner einem verbrennenden organischen Stoff aus Hülsen von Reis, Weizen, Hafer, Roggen oder Gerste, Sägespänen oder Zellstoffbrei oder einem Gemisch davon gelöst, die dadurch gekennzeichnet ist, daß sie 20 bis 50 Gew.-Teile feuerfesten Ton und/oder Kaolin, 5 bis 30 Gew.-Teile flüssigen oder festen wasserlöslichen anorganischen Binder, 5 bis 50 Gew.-Teile Wasser und 50 bis 180 Vol.-Teile je 100 Vol.-Teile des restlichen Gemischs verbrennender organischer Stoff, vorgetränkt mit einem flüssigen anorganischen Binder, enthält.

Vorteilhafterweise wird als fester oder flüssiger wasserlöslicher anorganischer Binder ein Gemisch aus sauren Metallphosphaten vom Aluminium-, Chrom- oder Magnesiumphosphattyp oder Aluminium-Sulfat oder ein Gemisch aus Metallphosphaten und Sulfaten oder eine Organosilikat-Verbindung vom Ethylsilikat- oder alkalischen Metallsilikattyp verwendet.

Um das Spektrum der synthetisierten feuerfesten Thermoisolationsmassen und deren Anwendungsgebiete zu erweitern, können bis zu 50 % des in der Masse enthaltenen Tons und/oder Kaolins durch einen kleinkörnigen feuerfesten inerten Fülstoff vom Aluminiumoxid-, Alumosilikat-Schamotte-, Mullit-Schamotte-, Siliziumdioxid-, Dichromdioxid-, Magnesiumoxid-, Magnesiumsilikat-, Zirkoniumsilikattyp oder durch ein Gemisch davon ersetzt werden.

Die Rohmasse wird zum Isolieren von thermischen Aggregaten mittels Gießen oder Stampfen benutzt, wobei sie in eine feuerfeste Thermoisolationsmasse unter der Einwirkung der vom Wärmeaggregat ausgestrahlten Wärme umgewandelt wird. Demzufolge wird der verbrennende organische Stoff, der mit dem sich in der Masse befindenden anorganischen Binder getränkt ist, verkohlt und teilweise verbrannt, ohne seine Form zu verlieren, wodurch Poren mit einer Mikrozellenstruktur entstehen.

Die feuerfeste Thermoisolationsmasse kann zum Formen von Ofenwänden, Blöcken oder Ziegelsteinen benutzt werden. Sie wird dabei in spezielle Formen oder Schalungen gegossen, wonach die Härtung bei Zimmertemperatur mit Hilfe von Zusatzmitteln erfolgt, welche den Härtungsprozeß beschleunigen. In dìesem Fall kann das Brennen der Masse entweder unter der Wirkung der Wärme des thermischen Aggregats oder durch eine thermische Behandlung in Industrieöfen erfolgen.

Die feuerfeste Thermoisolationsmasse kann bis zu einer Restfeuchtigkeit von 5 bis 15 % getrocknet und durch Pressen geformt werden, bevor die hergestellten Erzeugnisse in einem Industrieofen gebrannt werden.

Die erfindungsgemäße feuerfeste Thermoisolationsmasse hat den Vorteil, daß ihre Feuerfestigkeit groß ist, sie also hohen Betriebstemperaturen ausgesetzt werden kann, wobei ihre Wärmeleitfähigkeit niedrig ist, und daß diese Kennwerte in einem breiten Bereich variabel sind. Es können billige und allgemein zugängliche Rohstoffe eingesetzt werden, was Voraussetzungen für eine weitgehende und mannigfaltige Anwendung der Thermoisolationsmasse zum Isolieren unterschiedlicher Wärmeaggregate schafft. Außerdem kann die Masse als Rohstoffgemisch und als feuerfestes Erzeugnis eingesetzt werden.

Anhand der nachstehend angeführten Beispiele wird die Erfindung näher erläutert:

**Beispiel 1**

Es wird ein Gemisch aus den nachstehend angeführten Komponenten zubereitet:

| | |
|---|---|
| feuerfester Ton | 20 Gewichtsteile |
| Porzellanerde (Kaolin) | 10 Gewichtsteile |
| Dialuminiumtrioxid | 20 Gewichtsteile |
| Alumophosphat-Binder | 20 Gewichtsteile |
| Wasser | 30 Gewichtsteile |

Zu 100 Vol.-Teilen von diesem Gemisch werden 150 Vol.-Teile Reishülsen, vorgetränkt mit Alumophosphat-Binder, zugegeben, wonach das Gemisch in einem Mischapparat homogenisiert wird. Es wird eine plastische Masse hergestellt, welche roh mittels Stampfen oder Gießen auf das Ofengewölbe oder mittels Schalungen an senkrechten Wänden aufgetragen wird. Unter der Wirkung des Wärmeaggregats wird ein feuerfestes Thermoisolationsmaterial mit einer Dichte von 600 kg/m³ und einer Wärmeleitfähigkeit bei 20°C von 0,12 W/mK, das für eine maximale Betriebstemperatur von 1500°C geeignet ist.

**Beispiel 2**

Es wird wie im Beispiel 1 verfahren, nur daß anstatt Reishülsen Weizenschalen benutzt werden.

**Beispiel 3**

Die Verfahrensweise ist wie im Beispiel 1, es werden aber an Stelle der Reishülsen Haferhülsen benutzt.

**Beispiel 4**

Es wird wie im Beispiel 1 verfahren, es werden aber anstelle der Reishülsen gleiche Teile von Reis-, Roggen- und Gerstenhülsen benutzt.

**Beispiel 5**

Es wird ein Gemisch aus folgenden Komponenten hergestellt:

| | |
|---|---|
| feuerfester Ton | 15 Gewichtsteile |
| Porzellanerde (Kaolin) | 15 Gewichtsteile |
| Natrium-Metasilikat-Lösung<br>mit einer Dichte von 1,7 g/cm³ | 30 Gewichtsteile |
| Siliziumdioxid | 20 Gewichtsteile |
| Wasser | 20 Gewichtsteile |

Zu 100 Vol.-Teilen von diesem Gemisch werden 140 Vol.-Teile mit Aluminiumsulfat vorgetränkter Sägespäne zugegeben. Die hergestellte plastische Masse wird roh mit Hilfe einer Einschalung auf das feuerfeste Mauerwerk eines Industrieofens aufgetragen. Die feuerfeste Thermoisolationsmasse wird unter der Wärmewirkung des Ofens gebrannt und weist eine Dichte von 550 kg/m³ und eine Wärmeleitfähigkeit bei 20°C von 0,10 W/mK auf.

**Beispiel 6**

Es wird wie im Beispiel 5 verfahren, nur daß anstelle der Sägespäne ein Gemisch aus gleichen Teilen Reishülsen, Sägespänen und Zellstoffbrei benutzt wird.

**Beispiel 7**

Es wird ein Gemisch aus den folgenden Komponenten hergestellt:

| | |
|---|---|
| Kaolin (Porzellanerde) | 30 Gewichtsteile |
| Alumosilikat-Schamotte | 20 Gewichtsteile |
| Alumochromphosphat-Binder | 30 Gewichtsteile |
| Wasser | 20 Gewichtsteile |

Zu 100 Vol.-Teilen von diesem Gemisch werden 120 Vol.-Teile mit Alumophosphat-Binder vorgetränkte Sägespäne zugegeben, wonach das Gemisch homogenisiert wird. Unmittelbar vor dem Gebrauch werden zu 95 Gewichtsteilen des Gemisches 5 Gewichtsteile Alumooxidzement beigefügt. Das neugebildete Gemisch wird in einer Bolz- oder Metallform oder in einer Metallschalung geformt und bei Zimmertemperatur 24 bis 48 Stunden lang zur Härtung stehengelassen. Die hergestellten Blöcke weisen eine ausreichende mechanische Festigkeit für das Auskleiden von Ofenwänden auf. Die Blöcke werden durch die Wärme des thermischen Aggregats gebrannt. Diese feuerfeste Thermoisolationsmasse eignet sich zum Isolieren der Wände der Rauchabzugsröhren und anderer Teile von Industrieöfen. Ihre maximale Betriebstemperatur beträgt 1350° C.

**Beispiel 8**

Es wird ein Gemisch aus den folgenden Komponenten hergestellt:

| | |
|---|---|
| feuerfester Ton | 10 Gewichtsteile |
| Siliziumdioxid | 20 Gewichtsteile |
| Kaolin | 10 Gewichtsteile |
| Äthylsilikat | 20 Gewichtsteile |
| Wasser | 30 Gewichtsteile |

Zu 100 Vol.-Teilen von diesem Gemisch werden 150 Gewichtsteile Reishülsen zugegeben, welche mit Alumophosphat-Binder vorgetränkt werden. Die erhaltene plastische Masse wird roh durch Stampfen auf das Ofengewölbe oder mit Hilfe von Schalungen auf senkrechte Wände aufgetragen. Unter der Wirkung der Wärme des Wärmeaggregats wird ein feuerfestes Thermoisolationsmaterial mit einer Dichte von 550 kg/m$^3$ und einer Wärmeleitfähigkeit bei 20° C von 0,11 W/mK erhalten, dessen maximale Betriebstemperatur 1400° C beträgt.

**Beispiel 9**

Das im Beispiel 1 angeführte Gemisch wird bis zu einer Restfeuchtigkeit von 10 % getrocknet, wonach es in Form von Backsteinen gepreßt wird, welche einer Trocknung und einem Hochtemperaturbrennen ausgesetzt werden. Die fertigen Backsteine weisen eine Dichte von 600 kg/m$^3$, eine Druckfestigkeit von 5 MPa, eine Wärmeleitzahl bei 20° C von 0,12 W/mK auf und sind für eine Arbeitstemperatur von 1500° C bestimmt.

**Patentansprüche**

1. Thermoisolationsmasse aus einem Gemisch von feuerfestem Ton und/oder Kaolin, flüssigem oder festem wasserlöslichen anorganischen Binder, Wasser und als Porenbildner einem verbrennenden organischen Stoff aus Hülsen von Reis, Weizen, Hafer, Roggen oder Gerste, Sägespänen oder Zellstoffbrei oder einem Gemisch davon, gekennzeichnet, durch 20 bis 50 Gewichtsteile feuerfesten Ton und/oder Kaolin, 5 bis 30 Gewichtsteile flüssiger oder fester wasserlöslicher anorganischer Binder, 5 bis 50 Gewichtsteile Wasser und 50 bis 180 Vol.-Teile je 100 Vol.-Teile des restlichen Gemischs verbrennender organischer Stoff, vorgetränkt mit einem flüssigen anorganischen Binder.

2. Feuerfeste Thermoisolationsmasse nach Anspruch 1, dadurch gekennzeichnet, daß der feste oder flüssige wasserlösliche anorganische Binder ein Gemisch aus sauren Metallphosphaten vom Aluminium-, Chrom- oder Magnesiumphosphat-Typ ist oder Aluminium-Sulfat oder ein Gemisch aus Metallsulfaten und Phosphaten oder eine organische Silikatverbindung vom Ethylsilikat- oder alkalischen Metasilikattyp ist.

3. Feuerfeste Thermoisolationsmasse nach Anspruch 1, dadurch gekennzeichnet, daß der in der Masse enthaltene feuerfeste Ton oder das Kaolin durch bis 50 % eines feinkörnigen feuerfesten inerten Füllstoffs vom Dialuminium-Trioxid-, Alumosilikat-Schamotte-, Mullit-Schamotte-, Siliziumdioxid-, Dichromtrioxid-, Magnesiumoxid-, Magnesiumsilikat-, Zirkoniumsilikattyp oder eines Gemisches davon ersetzt ist.

4

## Claims

1. Thermally insulating composition formed of a mixture of refractory clay and/or kaolin, liquid or solid water-soluble inorganic binder, water and, as pore former, a combustible organic substance from husks of rice, wheat, oats, rye or barley, sawdust or cellulose mush or a mixture thereof, characterised by 20 to 50 parts by weight of refractory clay and/or kaolin, 5 to 30 parts by weight of liquid or soluble water-soluble inorganic binder, 5 to 50 parts by weight of water and 50 to 180 parts by volume per 100 parts by volume of the remainder of the mixture of combustible organic material, pre-impregnated with a liquid inorganic binder.

2. Refractory thermally insulating composition according to claim 1, characterised in that the solid or liquid water-soluble inorganic binder is a mixture of acidic metal phosphates of aluminium, chromium or magnesium phosphate type or is aluminium sulphate or a mixture of metal sulphates and phosphates or is an organic silicate compound of ethyl silicate or alkali metal silicate type.

3. Refractory thermally insulating composition according to claim 1, characterised in that the refractory clay or the kaolin contained in the material is replaced by up to 50 % of a finely particulate refractory inert filler of dialuminium trioxide, aluminosilicate fireclay, mullite fireclay, silicon dioxide, dichromium trioxide, magnesium oxide, magnesium silicate, zirconium silicate type or a mixture thereof.

## Revendications

1. Masse thermoisolante, constituée d'un mélange d'argile réfractaire et/ou de kaolin, de liant minéral soluble dans l'eau, liquide ou solide, d'eau, et, comme agent porogène, d'une matière organique combustible, constituée de balles de riz, de blé, d'avoine, de seigle ou d'orge, de sciures ou de pâte de cellulose ou d'un mélange de ces matières, caractérisée par 20 à 50 parties en poids d'argile réfractaire et/ou de kaolin, 5 à 30 parties en poids de liant minéral, soluble dans l'eau, liquide ou solide, 5 à 50 parties en poids d'eau, et 50 à 180 parties en volume pour 100 parties en volume du mélange restant de matière organique combustible, pré-imprégnée par un liant minéral liquide.

2. Masse thermoisolante réfractaire selon la revendication 1, caractérisée par le fait que le liant minéral soluble dans l'eau, solide ou liquide, est un mélange de phosphates métalliques acides du type phosphate d'aluminium, de chrome ou de magnésium, ou est du sulfate d'aluminium ou un mélange de sulfates métalliques et de phosphates ou un composé silicaté organique de type silicate d'éthyle ou métasilicate alcalin.

3. Masse thermoisolante réfractaire selon la revendication 1, caractérisée par le fait que l'argile réfractaire ou le kaolin contenu dans la masse est remplacé jusqu'à 50 % par d'une matière de charge inerte réfractaire, à grains fins, de type trioxyde dialuminique, chamotte de type alumosilicate, chamotte de type mullite, dioxyde de silicium, trioxyde dichromique, oxyde de magnésium, silicate de magnésium, silicate de zirconium ou un mélange de ces matières.